# EUROPÄISCHE PATENTSCHRIFT

(11) **EP 2 469 717 B1**
(45) Veröffentlichungstag und Bekanntmachung des Hinweises auf die Patenterteilung: **21.06.2017**
(21) Anmeldenummer: 11010036.9
(22) Anmeldetag: 21.12.2011
(51) Int. Cl.: H04B 1/16, H04W 52/02

(54) **Funkempfänger und Verfahren zu seinem Betrieb**
Radio receiver and method for operation of the same
Récepteur radio et son procédé de fonctionnement

(30) Priorität: 23.12.2010 DE 102010056080
(43) Veröffentlichungstag der Anmeldung: 27.06.2012
(73) Patentinhaber: Diehl Metering Systems GmbH, 90451 Nürnberg (DE); Fraunhofer-Gesellschaft zur Förderung der angewandten Forschung e.V., 80686 München (DE)
(72) Erfinder: Becke, Gerhard, 91301 Forchheim (DE); Kauppert, Thomas, 90489 Nürnberg (DE); Gottschalk, Klaus, 90610 Winkelhaid (DE); Schlund, Christof, 91058 Erlangen (DE); Bernhard, Josef, 92507 Nabburg (DE)
(74) Vertreter: Diehl Patentabteilung

(56) Entgegenhaltungen:
- WO-A1-00/69084
- US-A1- 2003 114 128

## Beschreibung

Die Erfindung betrifft einen Funkempfänger gemäß dem Oberbegriff des Hauptanspruchs, ein Verfahren zum Betreiben eines solchen Funkempfängers und eine Verwendung eines solchen Funkempfängers.

Ein derartiger Funkempfänger ist etwa aus der DE 10 2005 034 102 A1 zum Aufnehmen von Verbrauchswerten für die Abrechnung insbesondere von Wasser-, Wärme- oder Elektrizitätsverbrauch bekannt, ohne eigens ein Wohngebäude oder gar dessen einzelnen Wohnungen zum Ablesen von Mess-Stellen betreten zu müssen, weil deren aktuellen Messwerte über miniaturisierte Datensender ausgestrahlt werden. Diese messstellen-codierten Verbrauchswerte werden in einer den Funkempfänger enthaltenden Ausleseeinheit vorverarbeitet und gegebenenfalls zwischengespeichert sowie daraus an eine Abrechnungszentrale übermittelt.

Insbesondere Funkempfänger für Datenübermittlung werden zunehmend nicht mehr in Hardware, sondern in Software unter Berücksichtigung des vorbekannten Charakters der zu erwartenden, interessierenden Daten realisiert. Dafür wird das Antennen-Empfangssignal, gewöhnlich nach Vorverstärkung, mittels eines Scanprogrammes abgetastet und über angepasste Filteralgorithmen in einem Signalprozessor ausgewertet.

So beschreibt die US 2003/0114128 A1 einen Funksendeempfänger mit einem digitalen Signalprozessor (DSP), der an den Ausgang eines Analog-DigitalWandlers eines Signalempfangspfades sowie an den Eingang eines Digital-Analog-Wandlers eines Signalsendepfades angeschlossen ist. Die Funktionalität des digitalen Signalprozessors umfasst hier die Signalentzerrung, SignalFilterung und die Datenverarbeitung.

Bei der WO 00/69084 A1 ist bei einem digitalen drahtlosen Kommunikationsgerät neben einem digitalen Signalprozessor noch ein Hauptprozessor (CPU) sowie ein rekonfigurierbares Multiprozessor-Bauteil vorgesehen. Alle drei Bauteile sind an einen Datenbus angeschlossen, der mit dem Ausgang eines A/D-Wandlers verbunden ist.

In dem Zusammenhang soll nun die technische Problemstellung gelöst werden, die Performance im Sinne der allgemeinen Leistungsfähigkeit eines solchen Funkempfängers, unter Berücksichtigung auch von Aspekten möglichst geringen Leistungsbedarfes, zu erhöhen.

Diese Aufgabe ist erfindungsgemäß durch die Merkmale des Hauptanspruchs gelöst. Danach können die digitalisierten Empfangssignale - statt unmittelbar - über einen programmierbaren digitalen Logikbaustein (ein FPGA ("Field Programmable Gate Array")) oder einen bereits anwendungsspezifisch ausgeführten digitalen Logikbaustein (einen ASIC ("Application-Specific Integrated Circuit")) auf einen Signalprozessor (einen DSP ("Digital Signal Processor"), einen Mikrocontroller ("µC") oder einen Mikroprozessor) geschaltet werden. Aus der Aufnahme des Logikbausteins in der Empfängerschaltung vor dem Signalprozessor resultiert dann der Vorteil, zahlreiche Korrelations-, Filter- und Detektions-Algorithmen aus dem Prozessor heraus in diese Logikschaltung vorvertegen zu können, innerhalb derer Parallelverarbeitungen in Echtzeit ablaufen - im Gegensatz zur seriellen Signalverarbeitung in einem Prozessor. Solche Beschleunigung des Demodulierens von digitalen Daten schon vor der abschließenden Prozessorfunktion erlaubt praktisch ohne Zeitverlust die Anwendung von aufwändigeren Kriterien für eine kritischere Auswertung der Datensignale, und die wiederum führt zu einer Erhöhung der Detektionssicherheit, was wegen verbesserter Störresistenz eine größere nutzbare Empfangsreichweite zur Folge hat.

Allerdings ist der Strombedarf derartiger Logikbausteine vergleichsweise hoch und insbesondere höher als bei einer reinen Prozessorverarbeitung. Deshalb ist gemäß der Erfindung weiterhin vorgesehen, den in Serie zum Signalprozessor liegenden Logikbaustein elektrisch zu überbrücken - oder gleich ganz fortzulassen -, nämlich wenn aufgrund der Umstände des zu erwartenden Einsatzszenarios solch eine erhöhte Performance des Daten-Funkempfängers gar nicht benötigt wird. Das kann etwa der Fall sein, wenn die Ausleseeinheit mit ihrem Empfänger im Stromsparmodus als Handgerät eingesetzt und in unmittelbarer Nähe von Datensendern vorbeigeführt werden soll. Wenn die Ausleseeinheit dagegen in einem Kraftfahrzeug betrieben wird, wo aus dem Bordnetz genügend Energie verfügbar ist, kann der Funkempfänger ohne weiteres mit dem Logikbaustein vor seinem Signalprozessor betrieben werden, um etwa von der Fahrbahn aus im Vorüberfahren auch über ein ausgedehntes Gelände verstreut betriebene Datensender im Weitbereichsmodus zu erfassen.

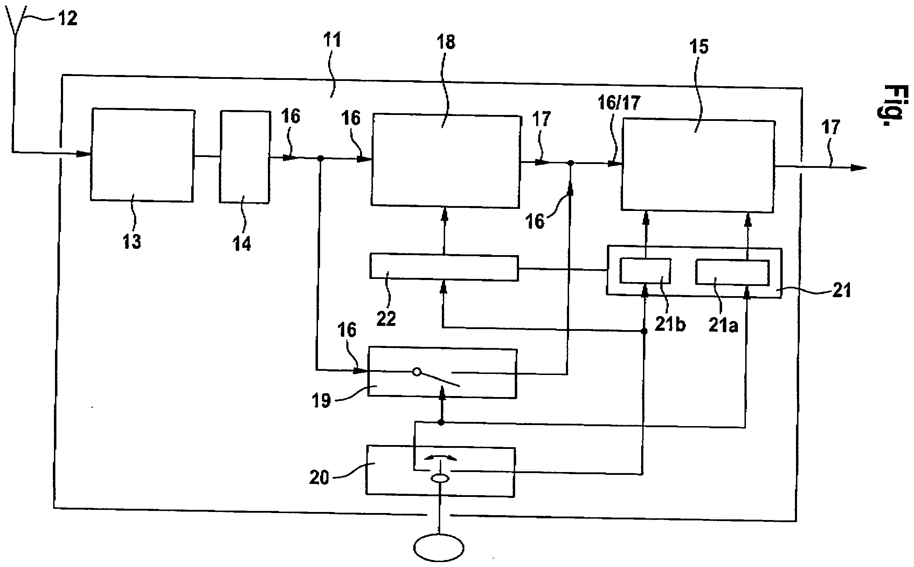

Weitere Merkmale und zusätzliche Weiterbildungen der Erfindung ergeben sich aus den weiteren Ansprüchen und, auch hinsichtlich deren Vorteilen, aus nachstehender Beschreibung eines bevorzugten Realisierungsbeispieles zur erfindungsgemäßen Lösung. Die einzige Figur der Zeichnung veranschaulicht in der auf das Prinzipielle abstrahierten Skizze eines einpoligen Blockschaltbildes die Signalverarbeitung in einem erfindungsgemäß ausgelegten Daten-Funkempfänger.

Ein derartiger, insbesondere in einer Messdaten-Ausleseeinheit betriebener Funkempfänger 11 ist mit einem Anschluss für eine interne oder externe Antenne 12 ausgestattet, die einen analogen Verstärker 13 speist. Dem folgt ein Analog-Digital-Wandler 14, Der ist gewöhnlich direkt auf einen Signalprozessor 15 (z, B. einen DSP, einen "Digital Signal Processor") zum Filtern und Analysieren der digitalisierten Empfangssignale 16 geschaltet. Die so gewonnen Messwerte 17 können unmittelbar an eine computerbestückte Auswertezentrale übermittelt oder zunächst in der Ausleseeinheit zwischengespeichert werden.

Solche Signalverarbeitung lässt sich vertiefen und dennoch spürbar beschleunigen. Insbesondere lässt sich erfindungsgemäß ohne Verlängerung der Verarbeitungszeit über weitere Detektionskriterien eine gesteigerte Detektionszuverlässigkeit und folglich eine Erhöhung der Empfangsreichweite des Funkempfängers 11 erzielen, wenn der seriell arbeitende Signalprozessor 15 wenigstens von einem Teil der Aufgaben des Analysierens und Dekodierens der Empfangssignale 16 dadurch entbunden wird, dass deren Algorithmen in wenigstens einem akut programmierbaren (oder bereits anwendungsspezifisch ausgelegten) komplexen Logikbaustein 18 (einem FPGA ("Field Programmable Gate Array") oder einem ASIC ("Application-Specific Integrated Circuit")) implementiert werden, der dem Signalprozessor 15 in Serie vorgeschaltet wird und nur noch weiterzuverarbeitende digitale Messwerte 17 an den Signalprozessor 15 liefert. Dazu mag der Funkempfänger 11 fertigungsseitig erst zweckgebunden an einem dafür vorgesehenen Steckplatz mit dem Logikbaustein 18 bestückt werden; oder er ist damit bereits standardmäßig vorbestückt. Der in der Empfängerschaltung zunächst noch leere und nun zu bestückende Steckplatz oder dergleichen Aufnahme beziehungsweise ein darin schon standardmäßig vorgesehener Logikbaustein 18 werden nun gewissermaßen durch Öffnen eines Überbrückungs-Schalters 19 im Signalpfad zum Signalprozessor 15 wirksam, wie es sich aus dem Blockschaltbild funktional ergibt.

Solche Auswahlmöglichkeit ist dort durch einen Umschalter 20 symbolisiert. Beim Hochlaufen zu Betriebsbeginn wird über diesen Umschalter 20 vorgegeben, ob der Funkempfänger 11 nun bei erhöhter Detektionszuverlässigkeit, also mit gesteigerter Reichweite oder aber ob er im Stromsparmodus betrieben werden soll. In letzterem Falle wird der Schalter 19 zum Überbrücken der Einbauposition eines Logikbausteins 18 geschlossen und zugleich ein nichtflüchtiger Konfigurationsspeicher 21a für die Programmierung des Signalprozessors 15 in dieser Betriebsart aktiviert, in der er im Rahmen des Funktionsnotwendigen wenigstens rudimentäre Signalverarbeitungsaufgaben aus den Funktionen des Logikbausteins 18 übernimmt.

Wenn dagegen die Bestückung der Schaltung des Funkempfängers 11 unter Einschluss des gesonderten Logikbausteins 18 vor dem Signalprozessor 15 und deshalb mit gesteigerter Empfindlichkeit wirksam werden soll, dann wird die Ausleseeinheit mit ihrem Funkempfänger 11 in derjenigen Funktionsstellung des Umschalters 20 hochgefahren, in welcher der Überbrückungs-Schalter 19 geöffnet ist, und damit auch ein aktualisierbarer Konfigurationsspeicher 22 für den Logikbaustein 18 aktiviert. Zugleich wird ein Konfigurationsspeicher 21b aktiviert, der im Signalprozessor 15 diejenigen Funktionen unterdrückt, die vom ihm nun vorgeschalteten Logikbaustein 18 wahrgenommen werden; wobei die Konfigurationsfunktionen 21a/21b schaltungstechnisch auch in einem einzigen, differenziert auslesbaren Prozessor-Konfigurationsspeicher 21 hinterlegt sein können. Für etwaige künftige Funktionserweiterungen braucht nicht in die Programmierung des Signalprozessors 15 eingegriffen zu werden; die werden einfacher im Konfigurationsspeicher 22 für den Logikbaustein 18 abgelegt.

Daneben kann auch vorgesehen sein, dass der Signalprozessor 15 oder sein Konfigurationsspeicher 21/21a/21b den Logikbaustein 18 oder dessen Konfigurationsspeicher 22 selbst konfiguriert, dass also z. B. der Signalprozessor 15 die durch den Logikbaustein 18 zu übernehmenden Funktionen - je nach einprogrammierten oder eingegebenen Vorgaben - selbst bestimmt.

Es sei noch erwähnt, dass in Ausgestaltung der Schaltung des Funkempfängers 11 natürlich ebenfalls vorgesehen sein kann, dass der Konfigurationsspeicher 21/21a/21b in den Signalprozessor 15 und/oder der Konfigurationsspeicher 22 in den Logikbaustein 18 integriert sind.

So wird also erfindungsgemäß die Möglichkeit eröffnet, einen Software-Funkempfänger 11, wie er insbesondere zum Gewinnen digitaler Messwerte 17 über einen Signalprozessor 15 aus demodulierten und digitalisierten Daten-Empfangssignalen 16 Einsatz findet, wahlweise für Betrieb im Stromsparmodus oder für Betrieb mit gesteigerter Reichweite zu initialisieren. In letzterem Falle wird ein wesentlicher Anteil der DetektionsAlgorithmen in einen dem Signalprozessor 15 vorgeschalteten Logikbaustein 18 verlagert, dessen ansonsten überbrückte Funktion dafür unter Aktivieren seines Konfigurationsspeichers 22 gewissermaßen durch Öffnen eines Überbrückungs-Schalters 19 freigegeben wird.

### Bezugszeichenliste

- 11: Funkempfänger
- 12: Antenne
- 13: Verstärker (hinter 12)
- 14: Analog-Digital-Wandler (ADC) (hinter 13)
- 15: Signalprozessor (DSP)
- 16: (digitalisierte) Empfangssignale (hinter 13)
- 17: (digitale) Messwerte (hinter 15)
- 18: digitaler Logikbaustein (FGPA / ASIC) (optional vor 15)
- 19: Schalter (zum Überbrücken von 18)
- 20: Umschalter
- 21: Aktualisierbarer Konfigurationsspeicher (EPROM bzw. FLASH) (21a+21b für 15)
- 22: Aktualisierbarer Konfigurationsspeicher (EPROM bzw. FLASH) (für 18)

## Patentansprüche

1. Funkempfänger (11) mit Signalprozessor (15) zur Auswertung digitalisierter Empfangssignale (16), **dadurch gekennzeichnet, dass** der Funkempfänger zur überbrückbaren Aufnahme eines, programmierbaren oder anwendungsspezifisch ausgeführten, digitalen Logikbausteins (18) vor dem Signalprozessor (15) ausgelegt und mit der Funktion eines Umschalters (20) ausgestattet ist, dem gemäß eine Inbetriebnahme des Funkempfängers (11) entweder unter Überbrückung der Aufnahme für den Logikbaustein (18), für den Betrieb ohne den Logikbaustein (18) vor dem Signalprozessor (15), oder aber unter Aktivieren eines Konfigurationsspeichers (22) für den Logikbaustein (18), für einen Betrieb mit dem Logikbaustein (18) vor dem Signalprozessor (15), initiierbar ist.

2. Funkempfänger nach dem vorangehenden Anspruch, **dadurch gekennzeichnet, dass** bei Aktivieren des Konfigurationsspeichers (22) für den Logikbaustein (18) ein Konfigurationsspeicher (21 b) für den Signalprozessor (15) in diesem Funktionen sperrt, die vom Logikbaustein (18) übernommenen sind.

3. Funkempfänger nach einem der vorangehenden Ansprüche, **dadurch gekennzeichnet, dass** in den Logikbaustein (18), zur Erreichung einer vergrößerten Empfangsreichweite, zusätzliche Algorithmen zur störungsresistenten Gewinnung von digitalen Daten aus den digitalisierten Empfangssignalen (16) implementiert sind.

4. Funkempfänger nach einem der vorangehenden Ansprüche, **dadurch gekennzeichnet, dass**, zur Erreichung eines reduzierten Energieverbrauches, bei funktional zu überbrückendem Logikbaustein (18) ein Prozessor-Konfigurations-speicher (21 a) aktivierbar ist, der im Signalprozessor (15) wenigstens die funktionswesentlichen Algorithmen für ein Umsetzen der digitalisierten Empfangssignale (16) in die digitalen Daten implementiert.

5. Funkempfänger nach einem der vorangehenden Ansprüche, **dadurch gekennzeichnet, dass** der Logikbaustein (18) und/oder sein Konfigurationsspeicher (22) von dem Signalprozessor (15) und/oder dessen Konfigurationsspeicher (21/21a/21b) konfigurierbar ausgeführt sind.

6. Funkempfänger nach einem der vorangehenden Ansprüche, **dadurch gekennzeichnet, dass** es sich bei den digitalen Daten um Messwerte (17) für Verbrauchsabrechnungen handelt und der Funkempfänger zum Liefern der digitalen Messwerte (17) aus den digitalisierten Empfangssignalen (16) ausgebildet ist.

7. Funkempfänger nach einem der vorangehenden Ansprüche, **dadurch gekennzeichnet, dass** es sich bei dem Logikbaustein (18) um ein FPGA oder einen ASIC und bei dem Signalprozessor (15) um einen DSP, einen Mikroprozessor oder einen Mikrocontroller handelt.

8. Verfahren zum Betreiben eines Funkempfängers (11) nach einem der vorangehenden Ansprüche wahlweise in einem Weitbereichsmodus oder in einem Stromsparmodus durch Umschalten zwischen Freigeben und Überbrücken der Funktion eines, programmierbaren oder anwendungsspezifisch ausgeführten, digitalen Logikbausteins (18) vor dem Signalprozessor (15) zum Ausgeben digitaler Daten, insbesondere digitaler Messwerte (17) für Verbrauchsabrechnungen.

9. Verfahren nach dem vorangehenden Anspruch, **dadurch gekennzeichnet, dass** bei Freigabe der Funktion des Logikbausteins (18) ein Konfigurationsspeicher (21 b) für den Signalprozessor (15) in diesem Funktionen sperrt, die vom Logikbaustein (18) übernommenen werden.

10. Verfahren nach Anspruch 8 oder 9, **dadurch gekennzeichnet, dass** der Logikbaustein (18), zur Erreichung einer vergrößerten Empfangsreichweite, zusätzliche Algorithmen zur störungsresistenten Gewinnung von digitalen Daten aus den digitalisierten Empfangssignalen (16) ausführt.

11. Verfahren nach einem der Ansprüche 8 bis 10, **dadurch gekennzeichnet, dass** beim Initiieren des Funkempfängers (11) im Stromsparmodus ein Konfigurationsspeicher (21a) zum Implementieren der funktionsnotwendigen Detektionsalgorithmen des Logikbausteins (18) im Signalprozessor (15) aktiviert wird.

12. Verfahren nach einem der Ansprüche 8 bis 11, **dadurch gekennzeichnet, dass** der Logikbaustein (18) und/oder sein Konfigurationsspeicher (22) von dem Signalprozessor (15) und/oder dessen Konfigurationsspeicher (21/21a/21b) konfiguriert werden.

## Claims

1. Radio receiver (11) having a signal processor (15) for evaluating digitized reception signals (16), **characterized in that** the radio receiver is designed to accommodate a programmable or application-specific digital logic module (18) in a bridgeable manner upstream of the signal processor (15) and is equipped with the function of a changeover switch (20), according to which activation of the radio receiver (11) can be initiated either by bridging the accommodation for the logic module (18) for operation without the logic module (18) upstream of the signal processor (15), or by activating a configuration memory (22) for the logic module (18) for operation with the logic module (18) upstream of the signal processor (15).

2. Radio receiver according to the preceding claim, **characterized in that**, if the configuration memory (22) for the logic module (18) is activated, a configuration memory (21b) for the signal processor (15) turns off in terms of these functions which are assumed by the logic module (18).

3. Radio receiver according to one of the preceding claims, **characterized in that** additional algorithms for obtaining digital data from the digitized reception signals (16) in an interference-resistant manner are implemented in the logic module (18) for the purpose of achieving an increased reception range.

4. Radio receiver according to one of the preceding claims, **characterized in that**, in the case of a logic module (18) which can be functionally bridged, a processor configuration memory (21a) which implements at least the functionally important algorithms for converting the digitized reception signals (16) into the digital data in the signal processor (15) can be activated for the purpose of achieving a reduced energy consumption.

5. Radio receiver according to one of the preceding claims, **characterized in that** the logic module (18) and/or its configuration memory (22) can be configured by the signal processor (15) and/or its configuration memory (21/21a/21b).

6. Radio receiver according to one of the preceding claims, **characterized in that** the digital data are measured values (17) for consumption bills, and the radio receiver is designed to provide the digital measured values (17) from the digitized reception signals (16).

7. Radio receiver according to one of the preceding claims, **characterized in that** the logic module (18) is an FPGA or an ASIC, and the signal processor (15) is a DSP, a microprocessor or a microcontroller.

8. Method for operating a radio receiver (11) according to one of the preceding claims either in a wide-range mode or in a power-saving mode by changing over between enabling and bridging the function of a programmable or application-specific digital logic module (18) upstream of the signal processor (15) in order to output digital data, in particular digital measured values (17) for consumption bills.

9. Method according to the preceding claim, **characterized in that**, if the function of the logic module (18) is enabled, a configuration memory (21b) for the signal processor (15) turns off in terms of these functions which are assumed by the logic module (18).

10. Method according to Claim 8 or 9, **characterized in that** the logic module (18) executes additional algorithms for obtaining digital data from the digitized reception signals (16) in an interference-resistant manner for the purpose of achieving an increased reception range.

11. Method according to one of Claims 8 to 10, **characterized in that**, if the radio receiver (11) is initiated in the power-saving mode, a configuration memory (21a) for implementing the functionally necessary detection algorithms of the logic module (18) in the signal processor (15) is activated.

12. Method according to one of Claims 8 to 11, **characterized in that** the logic module (18) and/or its configuration memory (22) is/are configured by the signal processor (15) and/or its configuration memory (21/21a/21b).

## Revendications

1. Récepteur radio (11) comportant un processeur de signal (15) destiné à analyser des signaux de réception numérisés (16), **caractérisé en ce que** le récepteur radio est conçu de manière à recevoir de manière pouvant être court-circuitée un composant logique numérique (18) réalisé de manière programmable ou spécifique d'application en amont du processeur de signal (15) et de manière à présenter la fonction d'un commutateur (20) qui peut être déclenché, conformément à une mise en service du récepteur radio (11) soit en court-circuitant le réceptacle destiné au composant (18), pour un fonctionnement sans le composant logique (18) en amont du processeur de signal (15), soit en activant une mémoire de configuration (22) destinée au composant logique (18), pour un fonctionnement avec le composant logique (18) en amont du processeur de signal (15).

2. Récepteur radio selon la revendication précédente, **caractérisé en ce que**, lors de l'activation de la mémoire de configuration (22) destinée au composant logique (18), une mémoire de configuration (21b) destinée au processeur de signal (15) inhibe dans celui-ci des fonctions qui sont prises en charge par le composant logique (18).

3. Récepteur radio selon l'une quelconque des revendications précédentes, **caractérisé en ce que**, pour augmenter la portée de réception, des algorithmes supplémentaires sont implantés dans le composant logique (18) afin d'obtenir de manière résistante aux perturbations des données numériques à partir des signaux de réception numérisés (16).

4. Récepteur radio selon l'une quelconque des revendications précédentes, **caractérisé en ce que**, pour réduire la consommation d'énergie lorsque le composant logique (18) à court-circuiter est fonctionnel, une mémoire de configuration de processeur (21a) peut être activée, ladite mémoire implantant au moins dans le processeur de signal (15) les algorithmes qui sont importants pour le fonctionnement et qui sont destinés à convertir les signaux de réception numérisés (16) en les données numériques.

5. Récepteur radio selon l'une quelconque des revendications précédentes, **caractérisé en ce que** le composant logique (18) et/ou sa mémoire de configuration (22) sont réalisés de manière à pouvoir être configurés par le processeur de signal (15) et/ou par sa mémoire de configuration (21/21a/21d).

6. Récepteur radio selon l'une quelconque des revendications précédentes, **caractérisé en ce que** les données numériques sont des valeurs de mesure (17) destinées à des relevés de consommation, et **en ce que** le récepteur radio est réalisé de manière à délivrer les valeurs de mesure numériques (17) à partir des signaux de réception numérisés (16).

7. Récepteur radio selon l'une quelconque des revendications précédentes, **caractérisé en ce que** le composant logique (18) est un réseau FPGA ou un circuit ASIC et **en ce que** le processeur de signal (15) est un processeur DSP, un microprocesseur ou un microcontrôleur.

8. Procédé de mise en fonctionnement sélective d'un récepteur radio (11) selon l'une quelconque des revendications précédentes dans un mode à grande portée ou dans un mode d'économie d'énergie par basculement entre une activation et un court-circuitage de la fonction d'un composant logique numérique (18) réalisé de manière programmable ou spécifique d'application en amont du processeur de signal (15) afin de délivrer des données numériques, notamment des valeurs de mesure numériques (17) destinées à des relevés de consommation.

9. Procédé selon la revendication précédente, **caractérisé en ce que**, lors de l'activation du composant logique (18), une mémoire de configuration (21b) destinée au processeur de signal (15) inhibe dans celui-ci des fonctions qui sont prises en charge par le composant logique (18).

10. Procédé selon la revendication 8 ou 9, **caractérisé en ce que** le composant logique (18), pour augmenter la portée de réception, met en oeuvre des algorithmes supplémentaires destinés à l'obtention résistante aux perturbations de données numériques à partir des signaux de réception numérisés (16).

11. Procédé selon l'une quelconque des revendications 8 à 10, **caractérisé en ce que**, lors du déclenchement du récepteur radio (11) dans le mode d'économie d'énergie, une mémoire de configuration (21a) destinée à mettre en oeuvre les algorithmes de détection nécessaires au fonctionnement du composant logique (18) est activée dans le processeur de signal (15).

12. Procédé selon l'une quelconque des revendications 8 à 11, **caractérisé en ce que** le composant logique (18) et/ou sa mémoire de configuration (22) sont configurés par le processeur de signal (15) et/ou par sa mémoire de configuration (21/21a/21d).
